# EUROPÄISCHE PATENTSCHRIFT

(11) **EP 2 797 777 B1**
(45) Veröffentlichungstag und Bekanntmachung des Hinweises auf die Patenterteilung: **21.02.2018**
(21) Anmeldenummer: 12818473.6
(22) Anmeldetag: 13.12.2012
(51) Int. Cl.: B60R 21/06

(54) **BEFESTIGUNG DER STANGE DES SICHERHEITSNETZES**
FIXATION OF THE BAR OF THE SECURITY NET
FIXATION DE LA BARRE DU FILET DE SECURITE

(30) Priorität: 19.12.2011 CZ 20110841
(43) Veröffentlichungstag der Anmeldung: 05.11.2014
(73) Patentinhaber: Skoda Auto A.S., 293 60 Mladá Boleslav (CZ)
(72) Erfinder: NOVOTNY, Josef, CZ-51801 Dobruska (CZ); MZIK, Jirí, CZ-51801 Dobruska (CZ)
(86) Internationale Anmeldenummer: PCT/CZ2012/000132
(87) Internationale Veröffentlichungsnummer: WO 2013/091591

(56) Entgegenhaltungen:
- EP-A1- 2 000 369
- CH-A- 407 024
- DE-U1- 20 215 934
- FR-A3- 2 951 121
- US-A- 5 366 127

## Beschreibung

### Technisches Gebiet

Die Erfindung betrifft eine Befestigungseinrichtung für eine Stange eines Sicherheitsnetzes, gebildet durch eine Drahtschlaufe und deren Abdeckung, die zu dem im Fahrzeuggepäckraum angeordneten Dachhimmel befestigt ist.

### Bisheriger Stand der Technik

Aus dem Stand der Technik ist die im Dokument US 5105521 beschriebene Lösung bekannt, angemeldet am 10.8.1990, Anmelder Technologies Automotive. Das Patent beschreibt die Methode der Befestigung der Dachgriffe und des Dachhimmels zur Karosserie. Zuerst wird der Griff durch den Dachhimmel durchgesteckt und von hinten dann eine Sicherungsunterlage an diesen aufgesetzt und eingeschoben. Die Laschen rasten hinter die Vorsprünge am Griff ein. Die Griffe werden somit zum Dachhimmel vorbefestigt um die Montage zu vereinfachen, die endgültige Befestigung zur Karosserie erfolgt dann durch die Verspreizung der Laschen mit dem Bolzen, der durch Einrasten des Griffes eingedrückt wird.

Weiter ist das zusammenhängende Dokument EP 2000369 A1 bekannt, angemeldet am 19.5.2008, Anmelder Renault SAS. Geschützt ist das System der Befestigung des Sicherheitsnetzes, wo die Drahtöse mit ihren flachen Enden direkt an die Karosserie durch Widerstandsschweißen angeschweißt wird.

In der Praxis ist aus dem Stand der Technik auch die Lösung mit einer Deckkappe und einer Aufhängung bekannt, wobei die Deckkappe der Öse für die Stange zur Aufhängung der Stange angeschraubt und durch den Dachhimmel nur durchgesteckt ist. Die Aufhängung ist zur Karosserie befestigt und umfasst einen Blechpressteil, unterschiedlich für die linke und rechte Seite. Es handelt sich im Prinzip um das System des "Schlüssellochs", also eine Drehrastfassung. An beiden Seiten der Stange befinden sich die Endstücke. Der Nachteil liegt darin, dass bei der Aktivierung des Kopfairbags der Dachhimmel verschwenkt wird und die Befestigung der Deckkappe abbrechen kann, wodurch diese in den Fahrgastraum hineinfliegen könnte.

### Darstellung der Erfindung

Die Aufgabe wird durch die vorliegende erfindungsgemäße technische Lösung nach Anspruch 1 gelöst. Bevorzugte Ausführungen werden in den Ansprüchen 2 -5 offenbart.

Die Abdeckung wird mit einem Spiel in der Öffnung des Dachhimmels befestigt bzw. vormontiert - sie wird durch den Dachhimmel durchgesteckt und von hinten wird eine U-förmige Unterlegplatte aufgesetzt. Diese zwei Teile sind gegeneinander durch Rastelemente gesichert. Bei der Montage wird die Abdeckung oder die U-förmige Unterlegplatte in die Aufhängevorrichtung eingerastet, das bedeutet, dass beim Wegdrängen des Dachhimmels von der Karosserie die Abdeckung weiterhin zum Dachhimmel befestigt bleibt, nur wird sie von der Aufhängevorrichtung gelöst.

Die Aufhängevorrichtung ist universell, also gleich für die rechte sowie linke Seite. Sie wird durch eine Drahtdoppelschlaufe gebildet. Die Stange weist auf jeder Seite einen Haken auf. Der Haken wird an der inneren Schlaufe eingehakt, die äußere Schlaufe liegt direkt darüber, was ein besseres Einführen des Hakens ermöglicht. Die äußere Schlaufe überragt in der Länge die innere und ist ihr zugeneigt. Dadurch wird sichergestellt, dass der Kopfairbag, der im Kopfbereich zwischen der Karosserie und dem Dachhimmel angeordnet ist, bei seiner Aktivierung abgedrängt und das Ausstossen des Hakens verhindert wird und zugleich bedeutet es auch eine Verstärkung des gesamten Aufbaues.

### Übersicht der Figuren der Zeichnungen

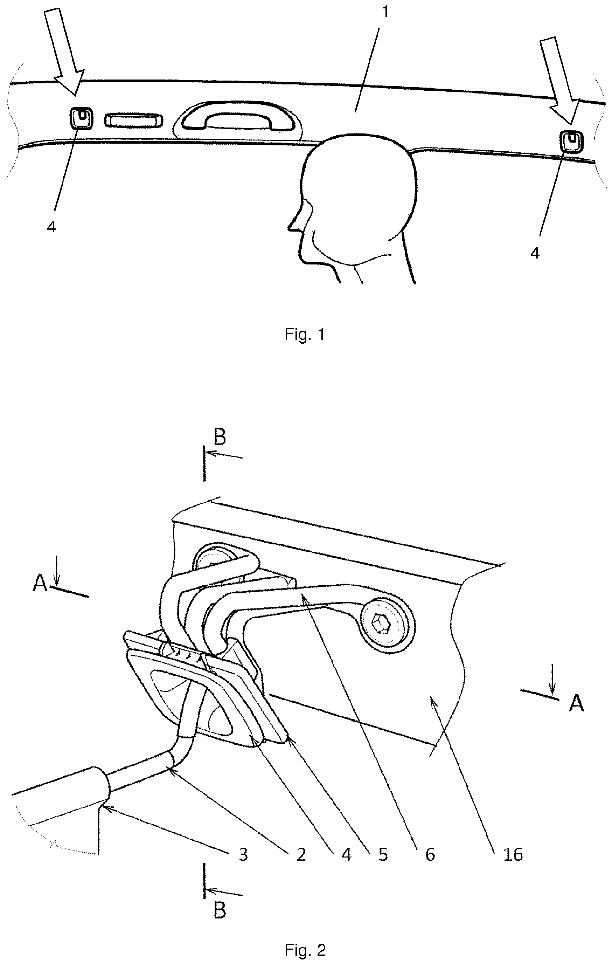

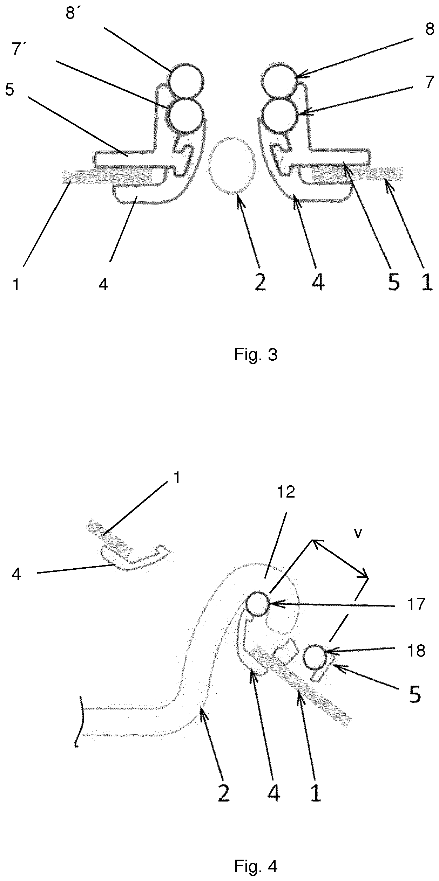

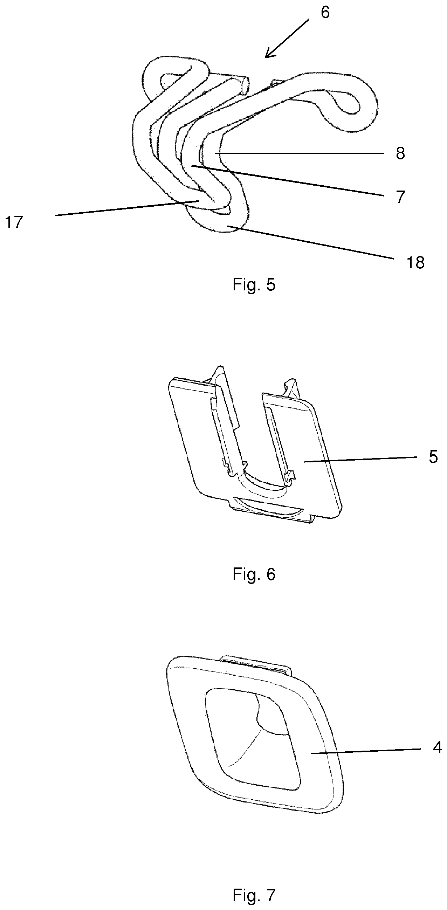

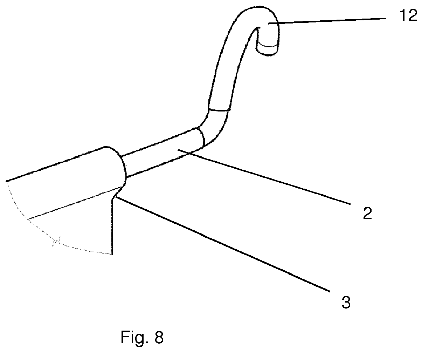

Die Erfindung wird anhand schematischer Abbildungen näher erläutert, wobei die Fig. 1 eine Ansicht der Fahrzeuginterieurs mit dem Dachhimmel, die Fig. 2 ein Detail der Befestigung der Sicherheitsstange, die Fig. 3 den Schnitt A-A, die Fig. 4 den Schnitt B-B darstellt. In Fig. 5 ist die eigentliche Aufhängung, in Fig. 6 die Unterlegplatte, in Fig. 7 die Abdeckung und in Fig. 8 der Haken der Stange dargestellt.

### Ausführungsbeispiele der Erfindung

Die Fahrzeuge werden im Interieur, meistens im Gepäckraum, mit einem Sicherheitstrennnetz 3 ausgestattet. Dieser ist auf einer Stange 2 aufgehängt, die zu beiden Karosserieseiten 16 in dem oberen Bereich unter dem Dach mittels Halterungen befestigbar ist. Im Dachhimmel 1 des Fahrzeuges ist an jeder Fahrzeuginnenseite eine Abdeckung der Halterung mit der Öffnung für das Einstecken der Stange 2 angeordnet.

Die wesentlichen Merkmale der Erfindung sind in dem kennzeichnenden Teil des Hauptanspruchs angegeben.

Die Stange 2 ist an jedem Ende verbogen, diese Verbiegung hat die Form eines Hakens 12. Ihre Befestigung wird durch die zur Karosserie 16 befestigten Aufhängevorrichtung 6 und die Abdeckung 4 mit einer Öffnung gebildet.

Die Abdeckung 4 ist in dem Dachhimmel 1 angeordnet und kann mit einer Unterlegplatte 5 mittels Rastelemente verbunden werden. Die Unterlegplatte 5 weist eine U-Form auf und kann mit der Aufhängevorrichtung 6 verbunden werden.

Die Abdeckung 4 ist mit einem Spiel in der Öffnung des Dachhimmels 1 befestigt bzw. vormontiert - sie wird durch die Öffnung im Dachhimmel 1 durchgesteckt und von hinten wird die U-förmige Unterlegplatte 5 aufgesteckt. Diese zwei Teile sind gegeneinander durch Rastelemente gesichert. Beim Einbau wird die Abdeckung 4 oder Unterlegplatte 5 an der Aufhängevorrichtung 6 eingerastet, was bedeutet, dass beim Wegdrängen des Dachhimmels 1 von der Karosserie 16 die Abdeckung 4 weiterhin zum Dachhimmel 1 befestigt bleibt, nur wird sie von der Aufhängevorrichtung 6 gelöst.

Die Aufhängevorrichtung 6 ist universell, also gleich für die rechte sowie linke Seite. Sie wird durch eine Drahtdoppelschlaufe gebildet, wobei die äußere Schlaufe 8, 8' in der Länge eine innere Schlaufe 7, 7' überragt. Die Distanz zwischen den Enden 17, 18 beider Schlaufen 7, 7', 8, 8' ist mindestens so groß wie der Durchmesser des Hakens 12 der Stange 2. Der Haken 12 der Stange 2 wird an die innere Schlaufe 7, 7' bzw. das Ende eingehakt 17. Die äußere Schlaufe 8, 8' ist direkt darüber angeordnet, was ein besseres Einführen des Hakens 12 ermöglicht. Die äußere Schlaufe 8, 8' überragt in der Länge die innere Schlaufe 7, 7' und ist ihr zugeneigt. Dadurch wird sichergestellt, dass der Kopfairbag, der im Kopfbereich zwischen der Karosserie 16 und dem Dachhimmel 1 angeordnet ist, bei seiner Aktivierung abgedrängt und das Ausstossen des Hakens 2 verhindert wird und zugleich bedeutet es auch eine Verstärkung des gesamten Aufbaues.

Das Material des Halters 6 ist Metall, meistens Stahl. Die Abdeckung 4 sowie die Unterlegplatte 5 sind aus Kunststoff.

### Bezugszeichenliste

1 - Dachhimmel
2 - Stange
3 - Sicherheitstrennnetz
4 - Abdeckung mit Öffnung
5 - U-förmige Unterlegplatte
6 - Aufhängevorrichtung
7, 7' - innere Schlaufe der Aufhängevorrichtung
8, 8' - äußere Schlaufe der Aufhängevorrichtung
12 - Haken an einer Seite der Stange
16 - Karosserie
17 - Ende der inneren Schlaufe
18 - Ende der äußeren Schlaufe
v - Distanz zwischen den Enden der Schlaufen der Aufhängung

## Patentansprüche

1. Befestigungseinrichtung für eine Stange (2) eines Sicherheitsnetzes (3), die in einem Fahrzeuggepäckraum angeordnet ist und durch eine zur Karosserie (16) befestigbare Aufhängevorrichtung (6), eine Abdeckung (4) und eine Unterlegplatte (5) gebildet wird, **dadurch gekennzeichnet, dass** die zur Karosserie (16) befestigbare Aufhängevorrichtung (6) durch eine Drahtdoppelschlaufe gebildet wird, wobei eine äußere Schlaufe (8, 8') in der Länge eine innere Schlaufe (7, 7') überragt und zumindest im Bereich eines Schnittes (A-A) die innere Schlaufe (7,7') zwischen der äußeren Schlaufe (8, 8') und der Abdeckung (4) angeordnet ist, und die Abdeckung (4) an der Fahrzeuginnenseite in einem Dachhimmel (1) angeordnet und mit einer Unterlegplatte (5) verbindbar ist, wobei die Anordnung mit der inneren Schlaufe (7, 7') ausgelegt ist, dass ein Haken (12) der Stange (2) an die innere Schlaufe (7, 7') einhakbar ist.

2. Befestigungseinrichtung für eine Stange eines Sicherheitsnetzes nach Anspruch 1, **dadurch gekennzeichnet, dass** die Abdeckung (4) mit der Unterlegplatte (5) mittels Rastelemente verbindbar ist.

3. Befestigungseinrichtung für eine Stange eines Sicherheitsnetzes nach Anspruch 2, **dadurch gekennzeichnet, dass** die Unterlegplatte (5) eine U-Form aufweist und mit der Aufhängung (6) verbindbar ist.

4. Befestigungseinrichtung für eine Stange eines Sicherheitsnetzes nach Anspruch 1, **dadurch gekennzeichnet, dass** die Distanz zwischen den Enden (17, 18) beider Schlaufen (7, 7', 8, 8') mindestens so groß wie der Durchmesser des Hakens (12) der Stange (2) ist.

5. Befestigungseinrichtung für eine Stange eines Sicherheitsnetzes nach Anspruch 4, **dadurch gekennzeichnet, dass** die äußere Schlaufe (8, 8') der inneren Schlaufe (7, 7') zugeneigt ist.

## Claims

1. A fastening device for a rod (2) of a safety net (3), which is arranged in a vehicle luggage compartment and is formed by a suspension device (6) fastenable to the car body (16), a cover (4) and a shim plate (5), **characterized in that** the suspension device (6) fastenable to the car body (16) is formed by a wire double loop, wherein an outer loop (8, 8') projects beyond the inner loop (7, 7') in the length and at least in the region of a section (A-A) the inner loop (7, 7') is arranged between the outer loop (8, 8') and the cover (4), and the cover (4) is arranged on the inside of the vehicle in a roof liner (1) and can be connected with a shim plate (5), wherein the arrangement is designed with the inner loop (7, 7'), such that a hook (12) of the rod (2) can be hooked into the inner loop (7, 7').

2. A fastening device for a rod of a safety net according to Claim 1, **characterized in that** the cover (4) can be connected with the shim plate (5) by means of snap-in elements.

3. A fastening device for a rod of a safety net according to Claim 2, **characterized in that** the shim plate (5) has a U shape and can be connected with the suspension (6).

4. A fastening device for a rod of a safety net according to Claim 1, **characterized in that** the distance between the ends (17, 18) of both loops (7, 7', 8, 8') is at least as great as the diameter of the hook (12) of the rod (2).

5. A fastening device for a rod of a safety net according to Claim 4, **characterized in that** the outer loop (8, 8') is attached to the inner loop (7, 7').

## Revendications

1. Système de fixation pour une tige (2) d'un filet de sécurité (3), qui est disposé dans un compartiment à bagages de véhicule et qui est formé par un dispositif de suspension (6) pouvant être fixé à la carrosserie (16), par un recouvrement (4) et par une plaque de support (5), **caractérisé en ce que** le dispositif de suspension (6) pouvant être fixé à la carrosserie (16) est formé par une double boucle de fil métallique, une boucle extérieure (8, 8') dépassant en longueur une boucle intérieure (7, 7') et, au moins dans la zone d'une coupe (A-A), la boucle intérieure (7, 7') étant disposée entre la boucle extérieure (8, 8') et le recouvrement (4), et le recouvrement (4) étant disposé sur le côté intérieur de véhicule dans un habillage du plafond (1) et pouvant être raccordé à une plaque de support (5), l'agencement étant recouvert avec la boucle intérieure (7, 7'), **en ce qu'**un crochet (12) de la tige (2) peut être accroché à la boucle intérieure (7, 7').

2. Système de fixation pour une tige d'un filet de sécurité selon la revendication 1, **caractérisé en ce que** le recouvrement (4) peut être raccordé à la plaque de support (5) au moyen d'éléments d'encliquetage.

3. Système de fixation pour une tige d'un filet de sécurité selon la revendication 2, **caractérisé en ce que** la plaque de support (5) présente une forme en U et peut être raccordée à la suspension (6).

4. Système de fixation pour une tige d'un filet de sécurité selon la revendication 1, **caractérisé en ce que** la distance entre les extrémités (17, 18) des deux boucles (7, 7', 8, 8') est au moins aussi grande que le diamètre du crochet (12) de la tige (2) .

5. Système de fixation pour une tige d'un filet de sécurité selon la revendication 4, **caractérisé en ce que** la boucle extérieure (8, 8') est inclinée vers la boucle intérieure (7, 7').
